# EUROPEAN PATENT APPLICATION

(11) **EP 4 769 321 A1**
(43) Date of publication of application: **01.07.2026**
(21) Application number: 24894352.4
(22) Date of filing: 25.09.2024
(51) Int. Cl.: G06T 17/20, G06T 7/13, G06T 7/00, G06T 7/73, G06T 3/4007, H01M 50/533

(54) **BATTERY MODELING APPARATUS AND OPERATION METHOD THEREOF**

(30) Priority: 23.11.2023 KR 20230164505
(71) Applicant: LG Energy Solution, Ltd., Seoul 07335 (KR)
(72) Inventor: SONG, Seung Ho, Daejeon 34122 (KR); PAK, Jeong In, Daejeon 34122 (KR)
(74) Representative: Plasseraud IP
(86) International application number: PCT/KR2024/014436
(87) International publication number: WO 2025/110456

(57) **Abstract**

A battery modeling device according to an embodiment disclosed in this document includes: an information acquisition unit configured to acquire an image of a battery and battery information including information on the number of a plurality of tabs included in the battery, an edge information generation unit configured to generate edge information on the basis of the image of the battery, and a controller configured to extract pixels corresponding to the plurality of tabs on the image on the basis of the edge information and the battery information, and modeling the plurality of tabs of the battery on the basis of the pixels.

## Description

### Technical Field

### CROSS-REFERENCE TO RELATED APPLICATION

This application claims priority to and the benefit of Korean Patent Application No. 10-2023-0164505 filed in the Korean Intellectual Property Office on November 23, 2023, the entire contents of which are incorporated herein by reference.

### TECHNICAL FIELD

Embodiments disclosed in this document relate to a battery modeling device and an operating method thereof.

### Background Art

Recently, research and development on secondary batteries have been actively conducted. Here, the secondary batteries are batteries that can be charged and discharged, and mean to include all of conventional Ni/Cd batteries, Ni/MH batteries, and recent lithium-ion batteries. The lithium-ion batteries among the secondary batteries have an advantage of having a much higher energy density compared to the conventional Ni/Cd batteries, Ni/MH batteries, and the like. In addition, as the lithium-ion batteries may be manufactured to be small and lightweight, they are used as power supplies for mobile devices. In addition, as the scope of use has been expanded to power supplies of electric vehicles, the lithium-ion batteries draw attention as a next-generation energy storage medium.

In addition, the secondary batteries may be generally used as a battery pack including a battery module having a plurality of battery cells connected in series and/or in parallel. In addition, the secondary batteries may be used as a battery rack including a plurality of battery modules and a rack frame accommodating the battery modules.

Meanwhile, as the internal shape of a manufactured secondary battery may not exactly match the drawing due to the characteristics of the secondary batteries, modeling for each product may be needed. When modeling a secondary battery, modeling is performed separately for each of a plurality of cells included in the secondary battery, and there is a limitation in that excessive time and cost are required for modeling the secondary battery.

### Disclosure

### Technical Problem

An object of the embodiments disclosed in this document is to provide a battery modeling device for modeling a battery and an operating method thereof.

An object of the embodiments disclosed in this document is to provide a battery modeling device for modeling a battery on the basis of an image of the battery, and an operating method thereof.

An object of the embodiments disclosed in this document is to provide a battery modeling device for modeling a battery by arranging internal tabs at equal intervals in the inner space of the outermost tab, and an operating method thereof.

The technical problems of the embodiments described in this document are not limited to the technical problems mentioned above, and unmentioned other technical problems will be clearly understood by those skilled in the art from the following descriptions.

### Technical Solution

A battery modeling device according to an embodiment disclosed in this document comprises: an information acquisition unit configured to acquire an image of a battery cell and battery information including information on the number of a plurality of tabs included in the battery cell, an edge information generation unit configured to generate edge information on the basis of the image of the battery cell, and a controller configured to extract pixels corresponding to the plurality of tabs on the image on the basis of the edge information and the battery information, and modeling the plurality of tabs of the battery cell on the basis of the pixels (S300).

According to an embodiment, the controller may extract pixels corresponding to a pouch, a first outermost tab, and a second outermost tab of the battery cell on the image.

According to an embodiment, the controller may select pixels corresponding to internal tabs defined as tabs arranged between the first outermost tab and the second outermost tab on the basis of the pixels corresponding to the first outermost tab and the second outermost tab and information on the number.

According to an embodiment, the controller may set an inner space, which is a space between the first outermost tab and the second outermost tab on the image, confirm the number of internal tabs from the information on the number, and arrange the internal tabs at equal intervals in the inner space on the basis of the inner space and the number of internal tabs.

According to an embodiment, the controller may compare the internal tab and the edge information of a pixel corresponding thereto, and adjust arrangement of the internal tab on the basis of a result of the comparison.

According to an embodiment, the controller may convert position information of pixels corresponding to each of the pouch, the first outermost tab, the second outermost tab, and the internal tabs into world coordinate information.

According to an embodiment, the controller may model the plurality of tabs of the battery cell on the basis of the world coordinate information.

According to an embodiment, the controller may extract pixels corresponding to the pouch, the first outermost tab, and the second outermost tab by applying interpolation to the edge information.

According to an embodiment, the edge information generation unit may generate the edge information by inputting the image of the battery cell into an edge extraction program.

A battery modeling method according to an embodiment disclosed in this document comprises: an operation of acquiring an image of a battery cell and battery information including information on the number of a plurality of tabs included in the battery cell; an operation of generating edge information on the basis of the image of the battery cell; and an operation of extracting pixels corresponding to the plurality of tabs on the image on the basis of the edge information and the battery information, and modeling the plurality of tabs of the battery cell on the basis of the pixels.

According to an embodiment, the modeling operation includes an operation of extracting pixels corresponding to a pouch, a first outermost tab, and a second outermost tab of the battery cell on the image.

According to an embodiment, the modeling operation may include an operation of selecting pixels corresponding to internal tabs defined as tabs arranged between the first outermost tab and the second outermost tab on the basis of the pixels corresponding to the first outermost tab and the second outermost tab and information on the number.

According to an embodiment, the operation of selecting pixels is an operation of setting an inner space, which is a space between the first outermost tab and the second outermost tab on the image, confirming the number of internal tabs from the information on the number, and arranging the internal tabs at equal intervals in the inner space on the basis of the inner space and the number of internal tabs.

According to an embodiment, the modeling operation includes an operation of converting position information of pixels corresponding to each of the pouch, the first outermost tab, the second outermost tab, and the internal tabs into world coordinate information, and modeling the plurality of tabs of the battery cell on the basis of the world coordinate information.

According to an embodiment, the modeling operation may include an operation of extracting pixels corresponding to the pouch, the first outermost tab, and the second outermost tab by applying interpolation to the edge information.

Specific matters of other embodiments are included in the detailed description and drawings.

### Advantageous Effects

The battery modeling device and the operating method thereof according to the embodiments disclosed in this document may model a battery on the basis of an image of the battery.

The battery modeling device and the operating method thereof according to the embodiments disclosed in this document may model a battery by arranging internal tabs at equal intervals in the inner space of the outermost tab.

The effects of the battery modeling device and the operating method thereof according to the disclosure of this document are not limited to the effects mentioned above, and unmentioned other effects may be clearly understood by those skilled in the art according to the disclosure of this document.

### Description of Drawings

FIG. 1 is a block diagram showing a battery modeling device according to an embodiment disclosed in this document.
FIG. 2 is a view showing a CT image of a battery according to an embodiment disclosed in this document.
FIG. 3 is a view showing an operation of extracting an edge from a CT image of a battery by a battery modeling device according to an embodiment disclosed in this document.
FIG. 4 is a view showing an operation of extracting pixels corresponding to a pouch and outermost tabs from a CT image of a battery by a battery modeling device according to an embodiment disclosed in this document.
FIG. 5 is a view showing an operation of correcting pixels corresponding to a pouch and outermost tabs from a CT image of a battery by a battery modeling device according to an embodiment disclosed in this document.
FIG. 6 is a view showing an operation of extracting pixels corresponding to internal tabs by a battery modeling device according to an embodiment disclosed in this document.
FIG. 7 is a view showing an operation of modeling a battery by a battery modeling device according to an embodiment disclosed in this document.
FIG. 8 is a flowchart illustrating a battery modeling method according to an embodiment disclosed in this document.

In connection with the description of drawings, the same or similar reference numerals may be used for identical or similar components.

### Mode for Invention

Hereinafter, embodiments of the present invention will be described with reference to the accompanying drawings. However, it should be understood that this is not intended to limit the present invention to specific embodiments, but includes various modifications, equivalents, and/or alternatives of the embodiments of the present invention.

It should be understood that the embodiments of this document and terms used therein are not intended to limit the technical features described in this document to a specific embodiment, but include various modifications, equivalents, or alternatives of corresponding embodiments. In relation to the description of drawings, similar reference numerals may be used for similar or related components. Singular forms of a noun corresponding to an item may include one or more of the items, unless the related context clearly indicates otherwise.

In this document, each of the phrases such as "A or B", "at least one among A and B", "at least either A or B", "A, B or C", "at least one among of A, B and C", and "at least either A, B, or C" may each include any one of the items listed together in a corresponding phrase among the phrases, or all possible combinations thereof. The terms "1st", "2nd", "first", "second", "A", "B", "(a)", and "(b)" may be used only to distinguish a corresponding component from another corresponding component, and do not limit the components in other aspects (e.g., importance or order) unless specifically stated otherwise.

In this document, when a certain (e.g., a first) component is referred to as being "connected", "coupled", or "combined" with or referred to as being "coupled" or "connected" to another (e.g., a second) component with or without a term such as "functionally" or "communicatively", it means that the component may be connected to another component directly (e.g., wiredly or wirelessly) or indirectly (e.g., through a third component).

The method according to various embodiments disclosed in this document may be provided to be included in a computer program product. The computer program product may be traded between a seller and a buyer as goods. The computer program product may be distributed in the form of a machine-readable storage medium (e.g., a compact disc read only memory (CD-ROM)), or may be distributed online (e.g., downloaded or uploaded) through an application store or directly distributed between two user devices. In the case of online distribution, at least a part of the computer program product may be at least temporarily stored in a machine-readable storage medium, such as a memory of a manufacturer's server, an application store's server, or a relay server, or may be temporarily generated.

According to the embodiments disclosed in this document, each component (e.g., a module or a program) of the components described above may include a single or a plurality of entities, and some of the plurality of entities may be separately disposed in other components. According to the embodiments disclosed in this document, one or more of the components or operations of the components described above may be omitted, or one or more other components or operations may be added. Alternatively or in addition, a plurality of components (e.g., modules or a programs) may be integrated into a single component. In this case, the integrated component may perform one or more functions of each of the plurality of components in a way identical or similar to those performed by the corresponding component among the plurality of components before the integration. According to the embodiments disclosed in this document, the operations performed by the modules, programs, or other components may be executed sequentially, in parallel, repeatedly, or heuristically, or one or more of the operations may be executed in a different order or omitted, or one or more other operations may be added.

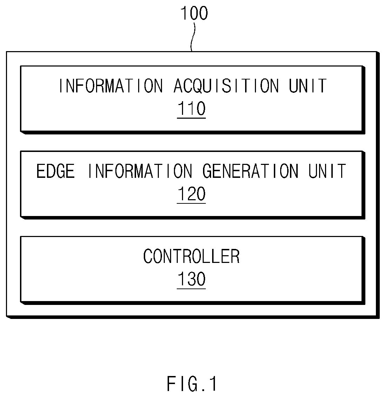

FIG. 1 is a block diagram showing a battery modeling device according to an embodiment disclosed in this document.

Referring to FIG. 1, the battery modeling device 100 may include an information acquisition unit 110, an edge information generation unit 120, and a controller 130. The battery modeling device 100 may model a battery using the information acquisition unit 110, the edge information generation unit 120, and the controller 130.

The information acquisition unit 110 may acquire an image of a battery. According to an embodiment, the information acquisition unit 110 may acquire an image of a battery by directly capturing an image of the battery or receiving an image of the battery from a separately provided battery photographing device (not shown). Here, the battery may be a pouch 210 type battery. In addition, the image of the battery may be a computed tomography image of the battery. That is, the image of the battery may be a Computed Tomography (CT) image of the battery.

The information acquisition unit 110 may acquire battery information. According to an embodiment, the information acquisition unit 110 may acquire battery information by receiving the battery information from a separately provided data storage unit (not shown), but it is not limited thereto. For example, the information acquisition unit 110 may also acquire the battery information on the basis of a barcode provided on the battery.

The information acquisition unit 110 may acquire information on the number of tabs included in the battery. The information acquisition unit 110 may acquire information on the number of tabs included in the battery on the basis of the battery information. That is, the battery information may include information on the number of tabs.

The information acquisition unit 110 may transmit the image of the battery to the edge information generation unit 120. In addition, the information acquisition unit 110 may transmit the battery information to the controller 130.

The edge information generation unit 120 may generate edge information. The edge information generation unit 120 may generate edge information on the basis of the image of the battery. That is, the edge information generation unit 120 may generate edge information on the basis of the image of the battery received from the information acquisition unit 110.

The edge information generation unit 120 may generate the edge information using an edge extraction program. According to an embodiment, the edge information generation unit 120 may generate the edge information by inputting an image of the battery into the edge extraction program. Here, the edge extraction program may be Canny Edge Detection, but it is not limited thereto.

The edge information generation unit 120 may generate edge information by analyzing each of a plurality of pixels included in the image of the battery. First, the edge information generation unit 120 may remove noise using a Gaussian filter. That is, the edge information generation unit 120 may remove noise included in the image of the battery by applying the Gaussian filter to the image of the battery.

The edge information generation unit 120 may generate edge information on the basis of at least one among the brightness, luminance, luminosity, and contrast of a plurality of pixels. According to an embodiment, the edge information generation unit 120 may compare brightness of a specific pixel with that of a pixel adjacent to the specific pixel. When the difference in the brightness between the specific pixel and the pixel adjacent to the specific pixel is greater than or equal to a preset value, the edge information generation unit 120 may set the specific pixel as an edge pixel. In addition, when the difference in the brightness between the specific pixel and the pixel adjacent to the specific pixel is lower than a preset value, the edge information generation unit 120 may not set the specific pixel as an edge pixel. The edge information generation unit 120 may extract edge pixels among the plurality of pixels included in the image of the battery by performing the same operation on each of the plurality of pixels included in the image of the battery. In addition, the edge information generation unit 120 may generate edge information on the basis of edge pixels.

According to an embodiment, the edge information generation unit 120 may generate the edge information on the basis of the difference between the feature of each of a plurality of pixels and the feature of adjacent pixels. For example, the edge information generation unit 120 may calculate the gradient of each pixel by comparing the brightness of a specific pixel with the brightness of the adjacent pixels of the specific pixel. When the gradient of the first pixel is greater than the gradients of the second pixel and the third pixel adjacent to the first pixel, the edge information generation unit 120 may modify the brightness of the second pixel and the third pixel to 0. That is, the edge information generation unit 120 may maintain the brightness of the first pixel and set the brightness of the second pixel and the third pixel to 0. In addition, the edge information generation unit 120 may compare the brightness of the first pixel with a set value. When the brightness of the first pixel is greater than or equal to the set value, the edge information generation unit 120 may select the first pixel as an edge pixel. When the brightness of the first pixel is lower than the set value, the edge information generation unit 120 may confirm whether there is a connection between the first pixel and surrounding pixels of the first pixel. In this case, when there is a pixel of which the brightness is not 0 among the pixels adjacent to the first pixel, the edge information generation unit 120 may select the first pixel as an edge pixel, and when the brightness of all pixels adjacent to the first pixel is 0, the edge information generation unit 120 may not select the first pixel as an edge pixel.

The edge information generation unit 120 may connect edge pixels. In addition, the edge information generation unit 120 may generate edge information on the basis of the edge pixels.

The edge information generation unit 120 may transmit the edge information to the controller 130.

The controller 130 may extract an edge corresponding to the pouch 210. The controller 130 may extract an edge corresponding to the pouch 210 from a battery image. According to an embodiment, the controller 130 may extract an edge corresponding to the pouch 210 from the battery image on the basis of the battery image and edge information. For example, the controller 130 may correspond an edge, which is positioned most outside in a reference direction and a direction opposite to the reference direction among the edges included in the battery image, to the pouch 210, but it is not limited thereto. As another example, the controller 130 may extract an edge corresponding to the pouch 210 from the battery image on the basis of battery shape information included in the battery information. In addition, the controller 130 may provide the edge information to the user, and select an edge selected by the user as an edge corresponding to the pouch 210.

The controller 130 may extract edges corresponding to a plurality of tabs included in the battery from the image of the battery. The controller 130 may extract edges corresponding to the outermost tabs 220 on the basis of edges corresponding to the battery image and the pouch 210.

The controller 130 may extract edges corresponding to the outermost tabs 220. The outermost tabs 220 may include a first outermost tab 221 and a second outermost tab 222. Here, the first outermost tab 221 is a tab arranged in a first direction among the outermost tabs 220, and the second outermost tab 222 is a tab arranged in a second direction opposite to the first direction among the outermost tabs 220. For example, the controller 130 may correspond an edge closest to an edge corresponding to the pouch 210 among the edges included in the battery image to the outermost tabs 220, but it is not limited thereto. As another example, the controller 130 may also extract edges corresponding to the outermost tabs 220 from the battery image on the basis of battery shape information included in the battery information. In addition, the controller 130 may provide the edge information to the user, and select an edge selected by the user as an edge corresponding to the outermost tabs 220.

The controller 130 may correct an edge corresponding to the pouch 210. The controller 130 may correct an edge corresponding to the pouch 210 using interpolation. That is, the controller 130 may correct an edge corresponding to the pouch 210 by connecting a plurality of edges corresponding to the pouch 210 using interpolation. Here, the interpolation may be a method of averaging a plurality of points to create a new point. The controller 130 may define the corrected edge as an edge of the pouch 210.

The controller 130 may extract pixels corresponding to the pouch 210. According to an embodiment, the controller 130 may extract pixels corresponding to the edge of the pouch 210.

The controller 130 may correct the edges corresponding to the outermost tabs 220. The controller 130 may correct the edges corresponding to the outermost tabs 220 using interpolation. That is, the controller 130 may correct the edges corresponding to the outermost tabs 220 by connecting a plurality of edges corresponding to the outermost tabs 220 using interpolation. The controller 130 may define the corrected edges as the edges of the outermost tabs 220.

The controller 130 may extract pixels corresponding to the outermost tabs 220. According to an embodiment, the controller 130 may extract pixels corresponding to the edges of the outermost tabs 220.

The controller 130 may define an inner space. The controller 130 may define the space between the outermost tabs 220 within the image of the battery as an inner space. That is, the controller 130 may define the space between the first outermost tab 221 and the second outermost tab 222 as an inner space.

The controller 130 may extract pixels corresponding to the internal tabs 230. The controller 130 may extract pixels corresponding to the internal tabs 230 on the basis of the inner space and the battery information. First, the controller 130 may confirm the number of internal tabs 230 from the battery information. For convenience of explanation, it is assumed that the number of internal tabs 230 is n. In this case, the controller 130 may divide the inner space into spaces one more than the number of internal tabs 230. According to an embodiment, when the controller 130 divides the inner space, directions of the outermost tabs 220 may be referenced. That is, the controller 130 may divide the inner space into n+1 spaces and define pixels corresponding to the boundary of each space as pixels corresponding to the internal tabs 230.

According to an embodiment, the controller 130 may arrange the internal tabs 230 at equal intervals in the inner space, and select pixels corresponding to the arranged internal tabs 230 as pixels corresponding to the internal tabs 230.

The controller 130 may extract the internal tabs 230. According to an embodiment, the controller 130 may extract the internal tabs 230 from an image of the battery by extracting pixels corresponding to the internal tabs 230 from the image of the battery.

The controller 130 may model a battery. According to an embodiment, the controller 130 may model tabs of the battery. The controller 130 may model the tabs of the battery on the basis of the pixels corresponding to the pouch 210, pixels corresponding to the outermost tabs 220, and pixels corresponding to the internal tabs 230. According to an embodiment, the controller 130 may convert position information of each of the pixels corresponding to the pouch 210, the pixels corresponding to the outermost tabs 220, and the pixels corresponding to the internal tabs 230 into world coordinates. That is, the controller 130 may change the position information of each of the pixels corresponding to the pouch 210, the pixels corresponding to the outermost tabs 220, and the pixels corresponding to the internal tabs 230 into a dimension of mm units.

According to an embodiment, the controller 130 may correct the world coordinates of the pouch 210, the outermost tabs 220, and the internal tabs 230. For example, the controller 130 may correct the world coordinates by expressing the shape of the world coordinates of each configuration and adjusting the degree of change in the gradient at each point. That is, the controller 130 may correct the world coordinates by mitigating the change in the gradient of the curves of the pouch 210, the outermost tabs 220, and the internal tabs 230.

The controller 130 may model the battery on the basis of the world coordinates of the pouch 210, the outermost tabs 220, and the internal tabs 230. The controller 130 may model the battery by generating a 2D image or a 3D image on the basis of the world coordinates of the pouch 210, the outermost tabs 220, and the internal tabs 230.

According to an embodiment, the controller 130 may provide modeling results to the user. For example, the controller 130 may transmit the modeling results to the user terminal through a separately provided communication unit (not shown) or provide the modeling results to the user through a display (not shown).

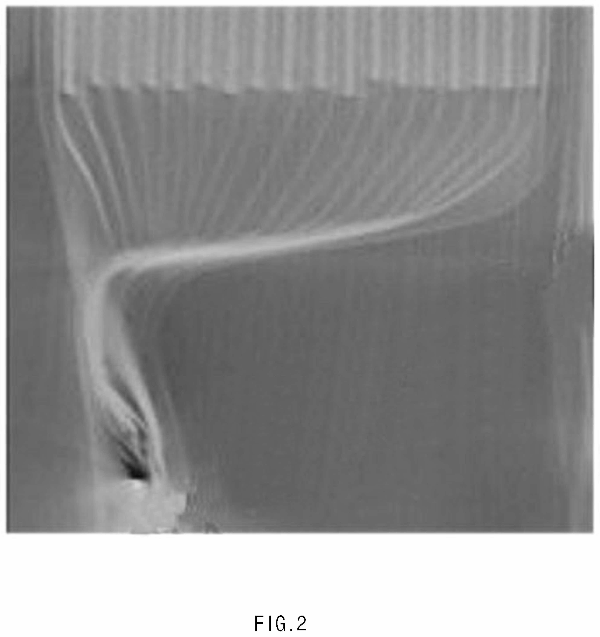

FIG. 2 is a view showing a CT image of a battery according to an embodiment disclosed in this document.

Referring to FIG. 2, the information acquisition unit 110 may acquire an image of a battery. According to an embodiment, the information acquisition unit 110 may acquire an image of a battery by directly capturing an image of the battery or receiving an image of the battery from a separately provided battery photographing device (not shown). Here, the battery may be a pouch 210 type battery. In addition, the image of the battery may be a computed tomography image of the battery. That is, the image of the battery may be a Computed Tomography (CT) image of the battery.

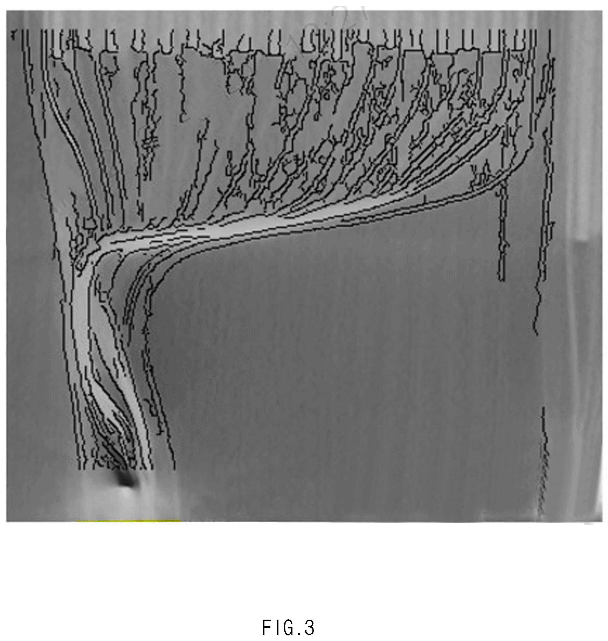

FIG. 3 is a view showing an operation of extracting an edge from a CT image of a battery by a battery modeling device according to an embodiment disclosed in this document.

Referring to FIG. 3, the edge information generation unit 120 may generate edge information. The edge information generation unit 120 may generate edge information on the basis of the image of the battery. That is, the edge information generation unit 120 may generate edge information on the basis of the image of the battery received from the information acquisition unit 110.

The edge information generation unit 120 may generate the edge information using an edge extraction program. According to an embodiment, the edge information generation unit 120 may generate the edge information by inputting an image of the battery into the edge extraction program. Here, the edge extraction program may be Canny Edge Detection, but it is not limited thereto.

The edge information generation unit 120 may generate edge information by analyzing each of a plurality of pixels included in the image of the battery. First, the edge information generation unit 120 may remove noise using a Gaussian filter. That is, the edge information generation unit 120 may remove noise included in the image of the battery by applying the Gaussian filter to the image of the battery.

The edge information generation unit 120 may generate edge information on the basis of at least one among the brightness, luminance, luminosity, and contrast of a plurality of pixels. According to an embodiment, the edge information generation unit 120 may compare brightness of a specific pixel with that of a pixel adjacent to the specific pixel. When the difference in the brightness between the specific pixel and the pixel adjacent to the specific pixel is greater than or equal to a preset value, the edge information generation unit 120 may set the specific pixel as an edge pixel. In addition, when the difference in the brightness between the specific pixel and the pixel adjacent to the specific pixel is lower than a preset value, the edge information generation unit 120 may not set the specific pixel as an edge pixel. The edge information generation unit 120 may extract edge pixels among the plurality of pixels included in the image of the battery by performing the same operation on each of the plurality of pixels included in the image of the battery. In addition, the edge information generation unit 120 may generate edge information on the basis of edge pixels.

According to an embodiment, the edge information generation unit 120 may generate the edge information on the basis of the difference between the feature of each of a plurality of pixels and the feature of adjacent pixels. For example, the edge information generation unit 120 may calculate the gradient of each pixel by comparing the brightness of a specific pixel with the brightness of the adjacent pixels of the specific pixel. When the gradient of the first pixel is greater than the gradients of the second pixel and the third pixel adjacent to the first pixel, the edge information generation unit 120 may modify the brightness of the second pixel and the third pixel to 0. That is, the edge information generation unit 120 may maintain the brightness of the first pixel and set the brightness of the second pixel and the third pixel to 0. In addition, the edge information generation unit 120 may compare the brightness of the first pixel with a set value. When the brightness of the first pixel is greater than or equal to the set value, the edge information generation unit 120 may select the first pixel as an edge pixel. When the brightness of the first pixel is lower than the set value, the edge information generation unit 120 may confirm whether there is a connection between the first pixel and surrounding pixels of the first pixel. In this case, when there is a pixel of which the brightness is not 0 among the pixels adjacent to the first pixel, the edge information generation unit 120 may select the first pixel as an edge pixel, and when the brightness of all pixels adjacent to the first pixel is 0, the edge information generation unit 120 may not select the first pixel as an edge pixel.

The edge information generation unit 120 may connect edge pixels. In addition, the edge information generation unit 120 may generate edge information on the basis of the edge pixels.

The edge information generation unit 120 may transmit the edge information to the controller 130.

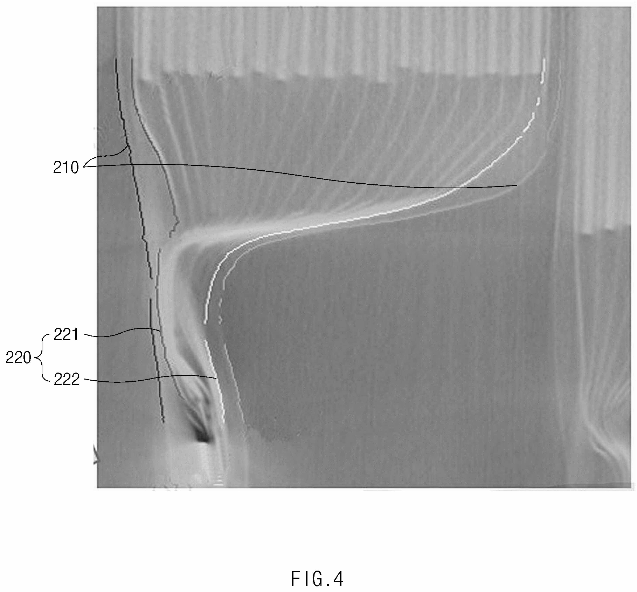

FIG. 4 is a view showing an operation of extracting pixels corresponding to a pouch and outermost tabs from a CT image of a battery by a battery modeling device according to an embodiment disclosed in this document.

Referring to FIG. 4, the controller 130 may extract an edge corresponding to the pouch 210. The controller 130 may extract an edge corresponding to the pouch 210 from a battery image. According to an embodiment, the controller 130 may extract an edge corresponding to the pouch 210 from a battery image on the basis of the battery image and edge information. For example, the controller 130 may correspond an edge, which is positioned most outside in a reference direction and a direction opposite to the reference direction among the edges included in the battery image, to the pouch 210, but it is not limited thereto. As another example, the controller 130 may extract an edge corresponding to the pouch 210 from the battery image on the basis of battery shape information included in the battery information. In addition, the controller 130 may provide the edge information to the user, and select an edge selected by the user as an edge corresponding to the pouch 210.

The controller 130 may extract edges corresponding to a plurality of tabs included in the battery from the image of the battery. The controller 130 may extract edges corresponding to the outermost tabs 220 on the basis of edges corresponding to the battery image and the pouch 210.

First, the controller 130 may extract edges corresponding to the outermost tabs 220. The outermost tabs 220 may include a first outermost tab 221 and a second outermost tab 222. Here, the first outermost tab 221 is a tab arranged in a first direction among the outermost tabs 220, and the second outermost tab 222 is a tab arranged in a second direction opposite to the first direction among the outermost tabs 220. For example, the controller 130 may correspond an edge closest to an edge corresponding to the pouch 210 among the edges included in the battery image to the outermost tabs 220, but it is not limited thereto. As another example, the controller 130 may also extract edges corresponding to the outermost tabs 220 from the battery image on the basis of battery shape information included in the battery information. In addition, the controller 130 may provide the edge information to the user, and select an edge selected by the user as an edge corresponding to the outermost tabs 220.

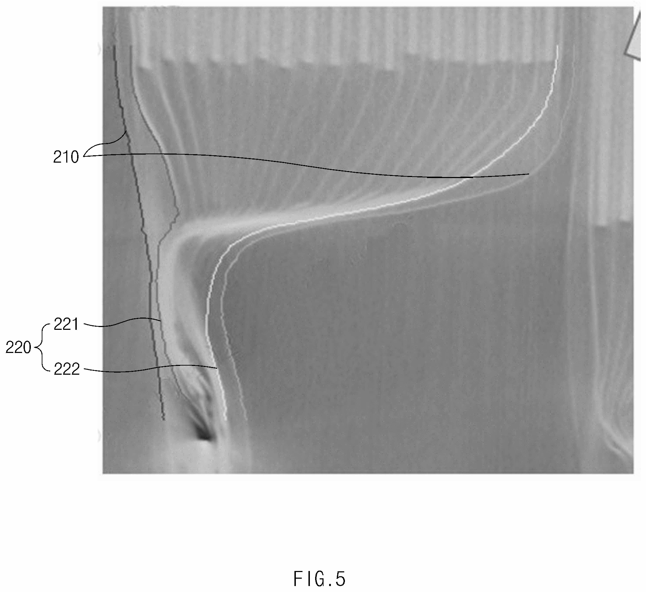

FIG. 5 is a view showing an operation of correcting pixels corresponding to a pouch and outermost tabs from a CT image of a battery by a battery modeling device according to an embodiment disclosed in this document.

Referring to FIG. 5, the controller 130 may correct an edge corresponding to the pouch 210. The controller 130 may correct an edge corresponding to the pouch 210 using interpolation. That is, the controller 130 may correct an edge corresponding to the pouch 210 by connecting a plurality of edges corresponding to the pouch 210 using interpolation. Here, the interpolation may be a method of averaging a plurality of points to create a new point. The controller 130 may define the corrected edge as an edge of the pouch 210.

The controller 130 may extract pixels corresponding to the pouch 210. According to an embodiment, the controller 130 may extract pixels corresponding to the edge of the pouch 210.

The controller 130 may correct the edges corresponding to the outermost tabs 220. The controller 130 may correct the edges corresponding to the outermost tabs 220 using interpolation. That is, the controller 130 may correct the edges corresponding to the outermost tabs 220 by connecting a plurality of edges corresponding to the outermost tabs 220 using interpolation. The controller 130 may define the corrected edges as the edges of the outermost tabs 220.

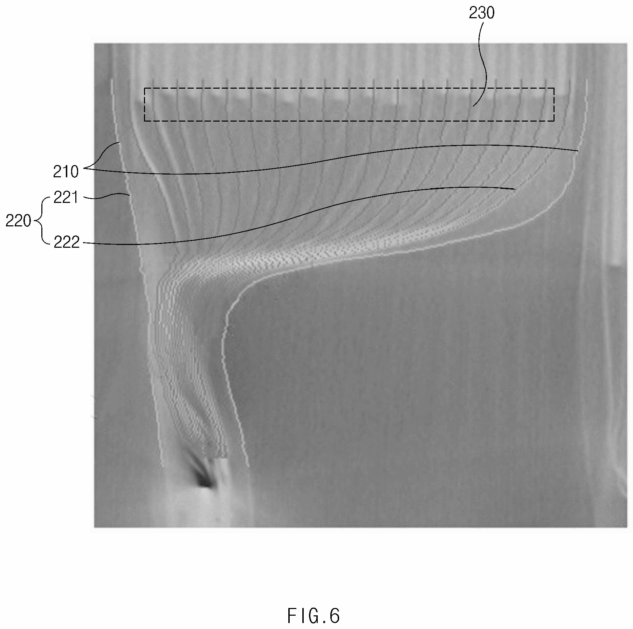

FIG. 6 is a view showing an operation of extracting pixels corresponding to internal tabs by a battery modeling device according to an embodiment disclosed in this document.

Referring to FIG. 6, the controller 130 may define an inner space. The controller 130 may define the space between the outermost tabs 220 within the image of the battery as an inner space. That is, the controller 130 may define the space between the first outermost tab 221 and the second outermost tab 222 as an inner space.

The controller 130 may extract pixels corresponding to the internal tabs 230. The controller 130 may extract pixels corresponding to the internal tabs 230 on the basis of the inner space and the battery information. First, the controller 130 may confirm the number of internal tabs 230 from the battery information. For convenience of explanation, it is assumed that the number of internal tabs 230 is n. In this case, the controller 130 may divide the inner space into spaces one more than the number of internal tabs 230. According to an embodiment, when the controller 130 divides the inner space, directions of the outermost tabs 220 may be referenced. That is, the controller 130 may divide the inner space into n+1 spaces and define pixels corresponding to the boundary of each space as pixels corresponding to the internal tabs 230.

According to an embodiment, the controller 130 may arrange the internal tabs 230 at equal intervals in the inner space, and select pixels corresponding to the arranged internal tabs 230 as pixels corresponding to the internal tabs 230.

The controller 130 may extract the internal tabs 230. According to an embodiment, the controller 130 may extract the internal tabs 230 from an image of the battery by extracting pixels corresponding to the internal tabs 230 from the image of the battery.

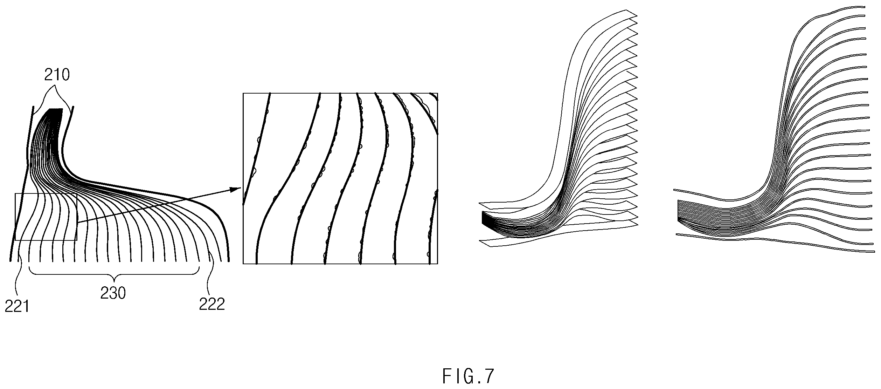

FIG. 7 is a view showing an operation of modeling a battery by a battery modeling device according to an embodiment disclosed in this document.

Referring to FIG. 7, the controller 130 may model a battery. According to an embodiment, the controller 130 may model tabs of the battery. The controller 130 may model the tabs of the battery on the basis of the pixels corresponding to the pouch 210, pixels corresponding to the outermost tabs 220, and pixels corresponding to the internal tabs 230. According to an embodiment, the controller 130 may convert position information of each of the pixels corresponding to the pouch 210, the pixels corresponding to the outermost tabs 220, and the pixels corresponding to the internal tabs 230 into world coordinates. That is, the controller 130 may change the position information of each of the pixels corresponding to the pouch 210, the pixels corresponding to the outermost tabs 220, and the pixels corresponding to the internal tabs 230 into a dimension of mm units.

According to an embodiment, the controller 130 may correct the world coordinates of the pouch 210, the outermost tabs 220, and the internal tabs 230. For example, the controller 130 may correct the world coordinates by expressing the shape of the world coordinates of each configuration and adjusting the degree of change in the gradient at each point. That is, the controller 130 may correct the world coordinates by mitigating the change in the gradient of the curves of the pouch 210, the outermost tabs 220, and the internal tabs 230.

The controller 130 may model a battery on the basis of the world coordinates of the pouch 210, the outermost tabs 220, and the internal tabs 230. The controller 130 may model a battery by generating a 2D image or a 3D image on the basis of the world coordinates of the pouch 210, the outermost tabs 220, and the internal tabs 230.

The battery modeling device 100 may model a battery on the basis of an image of the battery. The battery modeling device 100 may model a battery by arranging internal tabs 230 at equal intervals in the inner space of the outermost tabs 220. That is, the battery modeling device 100 may improve the efficiency of modeling the battery by extracting the pouch 210 and the outermost tabs 220 from the image of the battery, arranging internal tabs 230 at equal intervals in the space between the outermost tabs 220, and modeling the tabs of the battery on the basis of this.

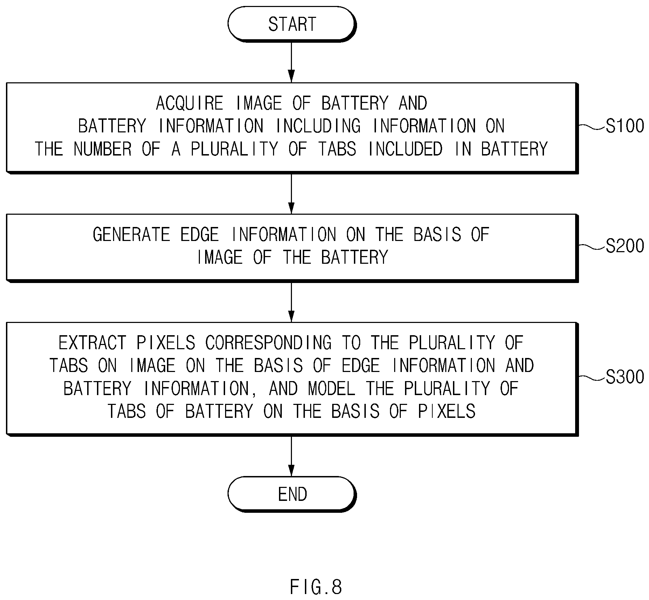

FIG. 8 is a flowchart illustrating a battery modeling method according to an embodiment disclosed in this document.

The embodiment illustrated in FIG. 8 is only an embodiment, and the order of operations according to various embodiments of the present invention may be different from the order of the operations illustrated in FIG. 8, and some of the steps illustrated in FIG. 8 may be omitted, the order between the steps may be changed, or the steps may be merged.

Referring to FIG. 8, a battery modeling method may include an operation of acquiring an image of a battery cell and battery information including information on the number of a plurality of tabs included in the battery cell (S100), an operation of generating edge information on the basis of the image of the battery cell (S200), and an operation of extracting pixels corresponding to the plurality of tabs on the image on the basis of the edge information and the battery information, and modeling the plurality of tabs of the battery cell on the basis of the pixels (S300).

Hereinafter, operations S100 to S300 described above are described in detail with reference to FIGS. 1 to 7.

In operation S100, the battery modeling device 100 may acquire an image of a battery cell and battery information including information on the number of a plurality of tabs included in the battery cell.

In operation S200, the battery modeling device 100 may generate edge information on the basis of the image of the battery cell. The battery modeling device 100 may generate the edge information using an edge extraction program. According to an embodiment, the battery modeling device 100 may generate the edge information by inputting an image of the battery into the edge extraction program.

In operation S300, the battery modeling device 100 may extract pixels corresponding to the plurality of tabs on the image on the basis of the edge information and the battery information, and model the plurality of tabs of the battery cell on the basis of the pixels.

According to an embodiment, the battery modeling device 100 may extract an edge corresponding to the pouch 210 from the battery image on the basis of the battery image and edge information. For example, the battery modeling device 100 may correspond an edge, which is positioned most outside in a reference direction and a direction opposite to the reference direction among the edges included in the battery image, to the pouch 210, but it is not limited thereto.

The battery modeling device 100 may correspond an edge closest to an edge corresponding to the pouch 210 among the edges included in the battery image to the outermost tabs 220, but it is not limited thereto. As another example, the battery modeling device 100 may also extract edges corresponding to the outermost tabs 220 from the battery image on the basis of battery shape information included in the battery information. In addition, the battery modeling device 100 may provide the edge information to the user, and select an edge selected by the user as an edge corresponding to the outermost tabs 220.

The battery modeling device 100 may extract pixels corresponding to the internal tabs 230. The battery modeling device 100 may extract pixels corresponding to the internal tabs 230 on the basis of the inner space and the battery information.

According to an embodiment, the battery modeling device 100 may arrange the internal tabs 230 at equal intervals in the inner space, and select pixels corresponding to the arranged internal tabs 230 as pixels corresponding to the internal tabs 230.

The battery modeling device 100 may model a battery. According to an embodiment, the battery modeling device 100 may model tabs of the battery. The battery modeling device 100 may model the tabs of the battery on the basis of the pixels corresponding to the pouch 210, pixels corresponding to the outermost tabs 220, and pixels corresponding to the internal tabs 230. According to an embodiment, the battery modeling device 100 may convert position information of each of the pixels corresponding to the pouch 210, the pixels corresponding to the outermost tabs 220, and the pixels corresponding to the internal tabs 230 into world coordinates. That is, the battery modeling device 100 may change the position information of each of the pixels corresponding to the pouch 210, the pixels corresponding to the outermost tabs 220, and the pixels corresponding to the internal tabs 230 into a dimension of mm units.

The battery modeling device 100 may model the battery on the basis of the world coordinates of the pouch 210, the outermost tabs 220, and the internal tabs 230. The battery modeling device 100 may model the battery by generating a 2D image or a 3D image on the basis of the world coordinates of the pouch 210, the outermost tabs 220, and the internal tabs 230.

The above explanation only describes the technical spirit disclosed in this document as an example, and those skilled in the art in the art may make various changes and modifications without departing from the essential characteristics of the embodiments disclosed in this document.

Therefore, the embodiments disclosed in this document are not intended to limit but to explain the technical spirit of the embodiments disclosed in this document, and the scope of the technical spirit disclosed in this document is not limited by these embodiments. The protection scope of the technical spirit disclosed in this document should be interpreted by the claims provided below, and all technical spirits within the equivalent scope should be interpreted as being included in the scope of this document.

### Description for Symbols

100: Battery modeling device
110: Information acquisition unit
120: Edge information generation unit
130: Controller
210: Pouch
220: Outermost tab
230: Internal tab

## Claims

1. A battery modeling device comprising:
an information acquisition unit configured to acquire an image of a battery and battery information including information on the number of a plurality of tabs included in the battery;
an edge information generation unit configured to generate edge information on the basis of the image of the battery; and
a controller configured to extract pixels corresponding to the plurality of tabs on the image on the basis of the edge information and the battery information, and model the plurality of tabs of the battery on the basis of the pixels.

2. The battery modeling device according to claim 1, wherein the controller extracts pixels corresponding to a pouch, a first outermost tab, and a second outermost tab of the battery on the image.

3. The battery modeling device according to claim 2, wherein the controller selects pixels corresponding to internal tabs defined as tabs arranged between the first outermost tab and the second outermost tab on the basis of the pixels corresponding to the first outermost tab and the second outermost tab and information on the number.

4. The battery modeling device according to claim 3, wherein the controller sets an inner space, which is a space between the first outermost tab and the second outermost tab on the image, confirms the number of internal tabs from the information on the number, and arranges the internal tabs at equal intervals in the inner space on the basis of the inner space and the number of internal tabs.

5. The battery modeling device according to claim 4, wherein the controller compares the internal tab and the edge information of a pixel corresponding thereto, and adjusts arrangement of the internal tab on the basis of a result of the comparison.

6. The battery modeling device according to claim 3, wherein the controller converts position information of pixels corresponding to each of the pouch, the first outermost tab, the second outermost tab, and the internal tabs into world coordinate information.

7. The battery modeling device according to claim 6, wherein the controller models the plurality of tabs of the battery on the basis of the world coordinate information.

8. The battery modeling device according to claim 1, wherein the controller extracts pixels corresponding to the pouch, the first outermost tab, and the second outermost tab by applying interpolation to the edge information.

9. The battery modeling device according to claim 1, wherein the edge information generation unit generates the edge information by inputting the image of the battery into an edge extraction program.

10. A battery modeling method comprising:
an operation of acquiring an image of a battery and battery information including information on the number of a plurality of tabs included in the battery;
an operation of generating edge information on the basis of the image of the battery; and
an operation of extracting pixels corresponding to the plurality of tabs on the image on the basis of the edge information and the battery information, and modeling the plurality of tabs of the battery on the basis of the pixels.

11. The battery modeling method according to claim 10, wherein the modeling operation includes an operation of extracting pixels corresponding to a pouch, a first outermost tab, and a second outermost tab of the battery on the image.

12. The battery modeling method according to claim 11, wherein the modeling operation includes an operation of selecting pixels corresponding to internal tabs defined as tabs arranged between the first outermost tab and the second outermost tab on the basis of the pixels corresponding to the first outermost tab and the second outermost tab and information on the number.

13. The battery modeling method according to claim 12, wherein the operation of selecting pixels is an operation of
setting an inner space, which is a space between the first outermost tab and the second outermost tab on the image,
confirming the number of internal tabs from the information on the number, and
arranging the internal tabs at equal intervals in the inner space on the basis of the inner space and the number of internal tabs.

14. The battery modeling method according to claim 12, wherein the modeling operation includes an operation of converting position information of pixels corresponding to each of the pouch, the first outermost tab, the second outermost tab, and the internal tabs into world coordinate information, and modeling the plurality of tabs of the battery on the basis of the world coordinate information.

15. The battery modeling method according to claim 10, wherein the modeling operation includes an operation of extracting pixels corresponding to the pouch, the first outermost tab, and the second outermost tab by applying interpolation to the edge information.
